Europäisches Patentamt
European Patent Office
Office européen des brevets

(11) Publication number: 0 207 686
A1

# EUROPEAN PATENT APPLICATION

(21) Application number: 86304685.0

(22) Date of filing: 17.06.86

(51) Int. Cl.⁴: B 01 D 53/04
C 01 B 13/02

(30) Priority: 17.06.85 GB 8515325

(43) Date of publication of application: 07.01.87 Bulletin 87/2

(84) Designated Contracting States: DE FR GB IT

(71) Applicant: Negretti Aviation Limited
73-77 Landsdowne Road
Croydon Surrey CR9 2HP(GB)

(72) Inventor: Armond, John Walter
6 Little Plucketts Way
Buckhurst Hill Essex IG9 5QU(GB)

(72) Inventor: Higgs, Terence Edward
9 Hallingbury Close
Bishops Stortford Essex(GB)

(74) Representative: Bubb, Antony John Allen et al,
GEE & CO. Chancery House Chancery Lane
London WC2A 1QU(GB)

(54) **Improvements in and relating to pressure swing oxygen generation systems.**

(57) In a pressure swing oxygen generation system comprising adsorption beds (1, 2) which are alternatively connected to a source (7) of compressed atmospheric air and a source of reduced pressure (8) by means of a switching valve (26), the control of the part cycle time after which switching of the valve (26) is effected, is achieved by continuously sensing the oxygen partial pressure at the outlet of each bed (1,2) that is for the time being producing the oxygen-enriched atmosphere, and causing the actuation of the valves (26) in response to the detection of the passage of the measuring signal through a corresponding threshold value. A sensor (17) connected directly at or adjacent the outlet of each bed is arranged to measure oxygen concentration in terms of the partial pressure at the prevailing ambient atmospheric pressure.

17
19
18
27
20
28
9
16
13
10
4
6
14
15
1
2
11
3
5
12
26
7
8
FIG.1

EP 0 207 686 A1

Croydon Printing Company Ltd.

Improvements in and relating to Pressure Swing Oxygen Generating Systems.

This invention concerns improvements in and relating to pressure swing oxygen generation systems.

So-called pressure swing oxygen generation systems are known. They generally comprise at least two beds of adsorption medium, means for cyclically coupling to each bed in turn a source of compressed atmospheric air, whereby, by adsorption of unwanted gas or gases within the bed, there is produced at a common outlet from the beds a continuous supply of atmospheric air of which the oxygen content is enriched in comparison with that of the air provided from the original source, each adsorption bed being purged of the waste gas or gases between the periods of time in which it is coupled to the source of compressed air, and means for controlling the duration of each period for which an adsorption bed is coupled to said source of compressed air in order correspondingly to control the mean concentration of oxygen in the air provided at said common outlet. They are utilised for the provision of an oxygen enriched air supply to the air crew of an aircraft when in flight. The generation of an oxygen enriched atmosphere is effected by the separation of nitrogen from atmospheric air by means of a zeolite molecular sieve adsorption bed that has the property of trapping nitrogen molecules by adsorption from atmospheric air pumped through the bed under pressure, whilst allowing oxygen molecules to pass. Thus, an oxygen enriched atmosphere is generated on the down-stream side of the separator bed and can be supplied, via a suitable reservoir and breathing regulator, to provide a breathable gas supply for the air crew.

Purging of waste gas from the adsorption bed when saturated with nitrogen molecules can be effected by application of reduced atmospheric pressure to the adsorption bed and/or by flushing the bed with a breathable gas derived from an alternative supply. Thus, by utilisation of a plurality of beds in timed relation such that a fresh bed becomes available during the operation of evacuating or purging a saturated bed, a continuously available source of oxygen enriched atmosphere can be provided.

It will be appreciated that in a system providing a life supporting breathing supply, it is a primary requirement that the oxygen concentration in the breathable atmosphere should be maintained reliably between close limits. In a breathing supply provided for an aircraft, it is further necessary that the oxygen concentration in the breathable atmosphere be adjusted in accordance with the altitude of the aircraft. These requirements necessitate that the oxygen concentration in the atmosphere supplied to the aircrew breathing apparatus be continuously monitored, and that the cycle of operation of the pressure swing oxygen generator be correspondingly adjusted to maintain the oxygen concentration in the reservoir of breathable atmosphere at the required level.

The oxygen concentration produced at the output of a pressure swing oxygen concentration system is dependent upon numerous factors, including the flow rate of the oxygen product, the volume of each adsorption bed, the configuration of the container for the adsorption medium, the type and density of packing of the adsorption medium, the gas pressures supplied to the system, the pressure in the waste outlet line, and the timing of the pressure swing cycle. Thus, a relatively complicated and correspondingly expensive control system is necessary in order to achieve the required performance of a pressure swing oxygen concentrator to be utilised in a life-support system. Difficulties arise in appropriately timing the cycle of the apparatus in order to achieve the required oxygen product concentration and hence optimum utilisation of the available volume of adsorption medium, particularly when, in order to achieve miniaturisation of the system, the available volume of medium is made relatively small.

Furthermore, the accurate measurement of oxygen concentration at the output of the system, at varying altitudes, whilst achieving sufficiently rapid response of the sensor, also poses difficulties.

It is accordingly an object of the present invention to provide an improved oxygen concentration system of the pressure-swing type, wherein control of the operation of the system in order to produce an accurately defined oxygen concentration, is improved in accuracy and simplified.

In accordance with one aspect of the invention, this object is achieved in a system of the kind referred to initially which is characterised by means for continuously monitoring the state of exhaustion of each adsorption bed, in order to determine the point at, or shortly before, which an increased concentration of oxygen will no longer be produced at the downstream side of the adsorption bed, and means responsive to an output signal from said monitoring means for controlling the cycle time at which a further adsorption bed is substituted for the exhausted or substantially exhausted bed prior to purging of the latter.

Various means could be adopted for monitoring of the state of exhaustion of the adsorption bed. For example, the position of the advancing front existing within the adsorption medium between the body of atmospheric air and entrapped nitrogen, on the one hand, and the body of oxygen enriched atmosphere on the other could be sensed at one or more points within the adsorption bed, by means of one or more sensors appropriately adapted to respond to a characteristic distinguishing the gases existing on respective sides of the front. Such a characteristic may, for example, be pressure change, or temperature or oxygen concentration.

In a preferred arrangement, however, the said means for monitoring the state of exhaustion of each adsorption bed comprises means for sensing the concentration of oxygen present in the oxygen enriched atmospheric air at the outlet of each bed and said responsive means comprises a control means for initiating the substitution of a fresh adsorption bed for an exhausted, or partly exhausted bed, when the said oxygen concentration is reduced to a given level. Advantageously, the said means for sensing oxygen concentration comprises an electrolytic cell for detecting the oxygen partial pressure utilising atmospheric air as a reference gas, a back pressure regulator being provided in the supply of air as the reference gas, in order to maintain a constant absolute pressure of the reference gas. Such an arrangement is thus suitable for use at varying altitudes.

Advantageously, the sensor for electrolytic sensing of the oxygen partial pressure comprises a zirconia sensor of a known type commercially available.

Features of the present invention will now be explained in more detail with reference to the accompanying drawings, it being understood that the corresponding description is provided by way of example and that the particular combination of features illustrated and/or described is not to be taken as limiting in any way the underlying concept or concepts or the invention. The latter may comprise any novel combination of such features or mechanically equivalent features that would be understood by one skilled in the art and having full knowledge of the state of the art existing at the time of filing of this Patent Application, as constituting any advantageous and nonobvious advance in the state of the art.

In the drawings:

Figure 1 is a diagrammatic view of a pressure swing oxygen concentration system according to the invention,

Figure 2 is a diagram showing curves of oxygen concentration for corresponding relationships of flow rate of product gas and part cycle time in a system as shown in Figure 1,

Figure 3 is diagram illustrating the cycle of operation of the system of Figure 1,

Figure 4 is a diagram showing a relationship between the sensed oxygen concentration in the system of Figure 1 at the end of each part cycle and the corresponding oxygen concentration of the breathable product atmosphere, and

Figure 5 is a block circuit diagram of a control circuit for the system of Figure 1.

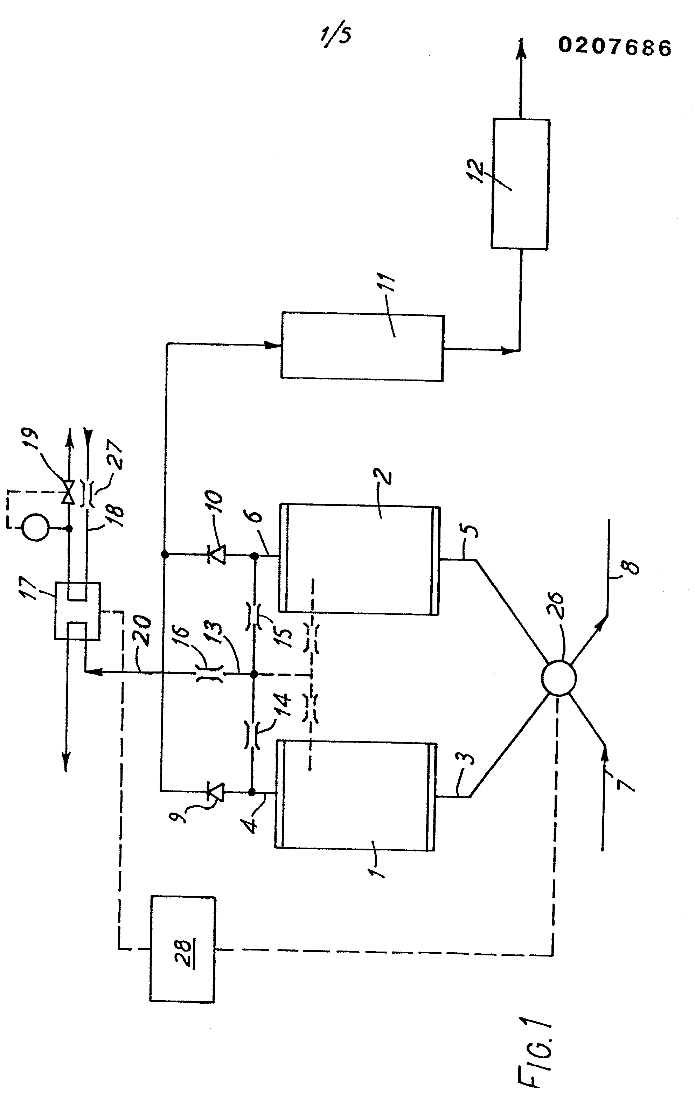

Referring to Fig. 1, there is shown in diagrammatic form a pressure swing oxygen generation system in accordance with one embodiment of the invention. The system comprises a pair of adsorption beds 1 and 2, which, in known manner, comprise canisters of suitable adsorption medium defining a gas flow path at respective ends of which are connected gas flow conduits 3,4,5,6. The conduits 3 and 5 are arranged to be connected in alternation, via a switching valve 26, respectively to a source of compressed atmospheric air indicated diagrammatically at 7, and to a source of reduced pressure indicated diagrammatically at 8.

Each of the conduits 4 and 6 are connected via a non-return valve, 9,10, to the inlet of a reservoir 11 for the storage of breathable atmosphere to be supplied, for example, to the air crew of an aircraft via a breathing regulator 12 which, in known manner, enables the breathable atmosphere to be drawn, on demand, at a breathable pressure, from the reservoir 11 of compressed gas. The outlets 4 and 6 are further connected in common, via T-shaped conduit 13 and restrictors or throttles 14,15 and 16 to a sensor 17 designed to measure the oxygen partial pressure of the gas flowing from the restrictor 16.

As will be explained below, it is desirable that the oxygen sensor 17 has a very rapid response. It has been ascertained that a so-called 'zirconia sensor' is capable of providing an accurate measurement of oxygen partial pressure with a very rapid response. However, such a zirconia sensor operates by the formation, at high temperature, of an electrolytic cell utilising, in addition to the oxygen enriched atmosphere to be measured, a reference gas, normally atmospheric air, containing oxygen at a predetermined partial pressure. Since the oxygen partial pressure of atmospheric air will vary with altitude, a reference air supply to the sensor 17 is provided via a throttle or restrictor 27 and an inlet 18, and is subject to the action of a back pressure regulating valve, indicated diagrammatically at 19, by means of which an absolute atmospheric pressure is set at the reference side of the oxygen sensing cell 17. The oxygen enriched supply of which the oxygen partial pressure is to be measured is supplied to the sensor 17 via a conduit 20 coupled to the restrictor 16. The breathable atmosphere of which a sample is supplied to the conduit 20 is allowed to bleed from the conduit 20 to the ambient atmosphere, for example that present in the air crew cabin, and thus the measure of the oxygen partial pressure obtained by the oxygen sensor 17 is effectively a measure of the oxygen partial pressure in the relevant gas, taken at the ambient pressure prevailing within the air crew cabin.

In the pressure swing oxygen enrichment system described, compressed air is supplied from the source 7, typically at a gauge pressure of approximately 2 bar, and is available for example from the compressor of the aircraft jet engine. A reduced pressure, for example that existing outside the aircraft cabin at altitude, is maintained at the outlet 8, and the valve 26 is regularly switched over, so that, in alternation, one of the two conduits 3 and 5 is connected to the source of compressed air 7, whilst the other is connected to the vacuum outlet 8. Thus, in known manner, as compressed air is passed through one of the canisters 1 and 2, an oxygen enriched atmosphere appears at the corresponding outlet 4 or 6, and passes via the corresponding non-return valve 9 or 10 to the reservoir 11. At the same time, waste gas that has been entrapped within the other one of the two canisters 1 and 2 is removed via outlet 8 by flushing the canister with oxygen enriched atmosphere derived from the other one of the two canisters via the conduit 13 and the restrictors 14 and 15.

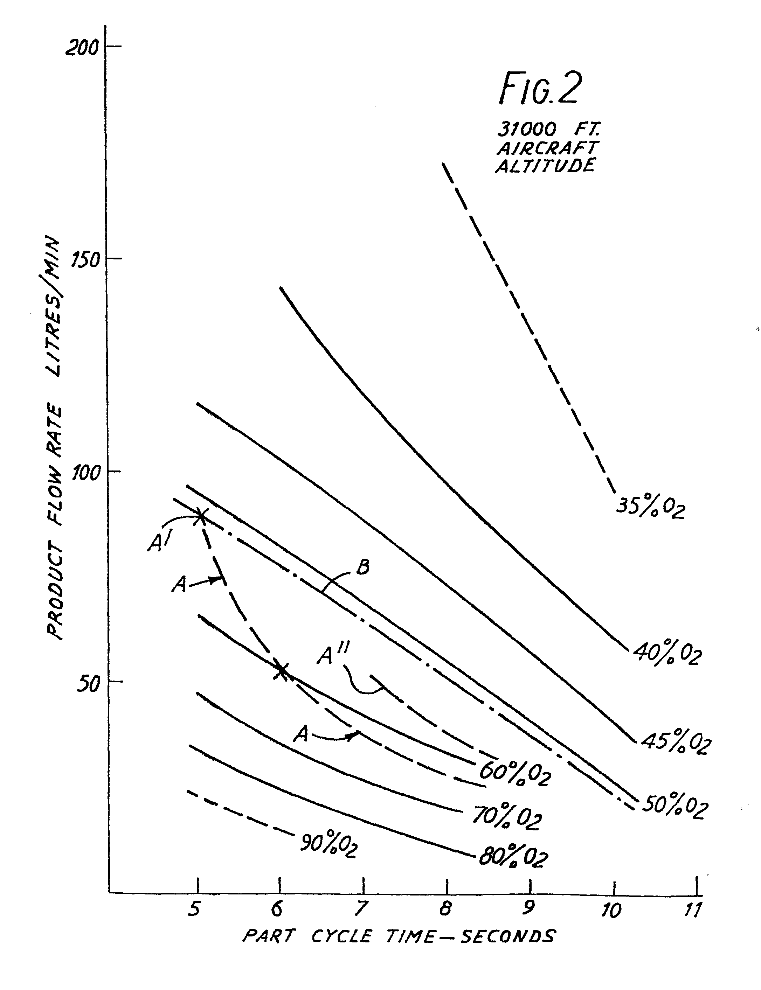

As will be appreciated by one skilled in the art, for a given supply pressure at the source 7 and subatmospheric pressure at the outlet 8, the concentration of oxygen that will be available to the reservoir 11 from the outlet of the system will be dependent upon the rapidity with which the switching valve 26 is operated in relation to the rate at which the breathable atmospheric medium is drawn from the reservoir 11. For example, as shown in Fig. 2 there is illustrated a series of graphs, wherein, for a given oxygen concentration the part cycle time between respective operations of the valve 26 is shown on the abscissa, the correspondingly available rate of flow of breathable atmosphere for the same oxygen concentration being shown on the ordinate.

In the operation of a pressure swing oxygen generation system for the supply of breathable atmosphere to an air crew, it is a requirement that, at any given altitude of the aircraft, the concentration of oxygen supplied to the air crew should remain substantially constant regardless of the rate at which the breathable atmosphere is consumed. Moreover, it is a further requirement that the oxygen concentration in the breathable atmosphere be varied in accordance with the altitude of the aircraft and the corresponding cabin pressure, in order that the oxygen partial pressure in the atmosphere available to the air crew is maintained substantially constant at varying altitudes. The attainment of these objectives has hitherto proved extremely difficult.

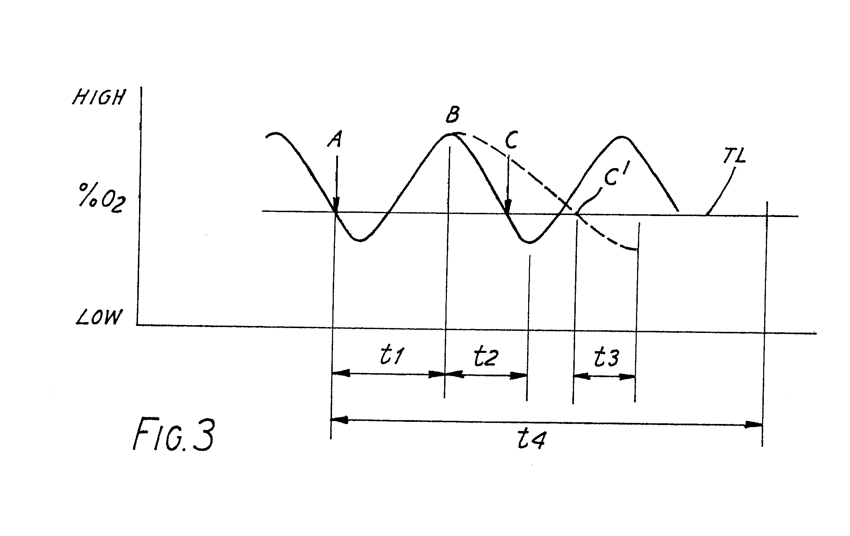

The present Applicants have observed that, in an arrangement comprising an oxygen sensor connected as

illustrated in Fig.1, during operation of the switching valve 26 at a given frequency, a corresponding cyclical variation in the oxygen partial pressure can be measured by the oxygen sensor 17 in view of the very rapid response of the oxygen sensor that can be obtained with this construction and arrangment of the sensor For example, there is shown in Fig. 3 a graph wherein the value of the output signal of the oxygen sensor 17 is indicated with respect to time, with time shown on the horizontal axis, and the oxygen sensor output signal, and the corresponding oxygen concentration, shown on the vertical axis. It will seen that the variation in oxygen concentration is approximately sinusoidal, and it has further been ascertained that by utilising the output signal of the sensor 17 to control switching of the valve 26 by means of an appropriate control circuit indicated diagrammatically at 28 in Fig 1, a surprisingly close correlation can be obtained between a threshold value at which switching of the valve 26 is initiated during the reduction of the oxygen concentration measured, and the mean oxygen concentration that is correspondingly made available to the reservoir 11 for a given rate of consumption of the breathable atmosphere.

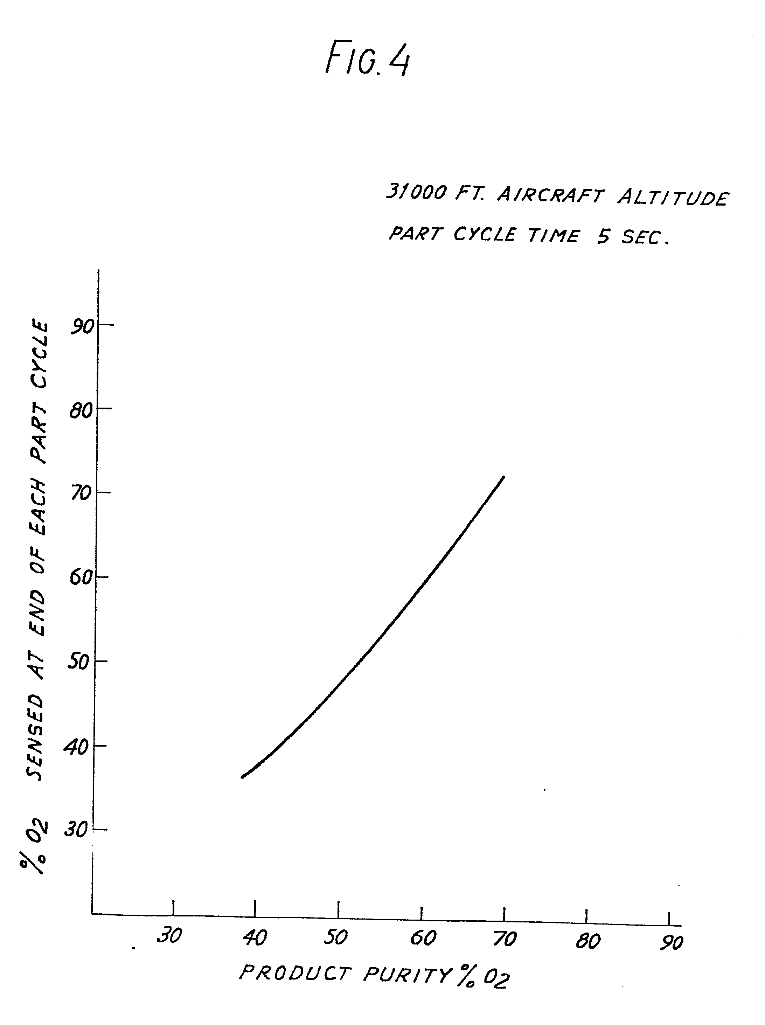

For example, Fig. 4 is a graph wherein the mean percentage oxygen concentration obtaining within the reservoir 11 is shown on the abscissa, against a corresponding value on the ordinate of the oxygen concentration measured by the sensor 17 in the reducing direction when switching of the valve 26 is initiated. The graph illustrated assumes that the corresponding consumption of the breathable atmosphere is such that a substantially constant cycle time occurs with the varying oxygen concentration.

0207686

Moreover, it has further been observed that since the sensor 17 provides a measurement of oxygen partial pressure at the cabin pressure of the aircraft, rather than the percentage oxygen concentration in the breathable atmosphere available from the reservoir 11, the system is capable of providing automatic adjustment of the oxygen concentration in the reservoir 11 to compensate for variation in altitude of the aircraft and corresponding variation in cabin pressure. For example, in the event of decompression occuring in the aircraft cabin, the corresponding variation in the oxygen partial pressure measured by the sensor 17 would produce the more rapid switching of the valve 26 required for the appropriate increase in oxygen concentration in the breathable atmosphere.

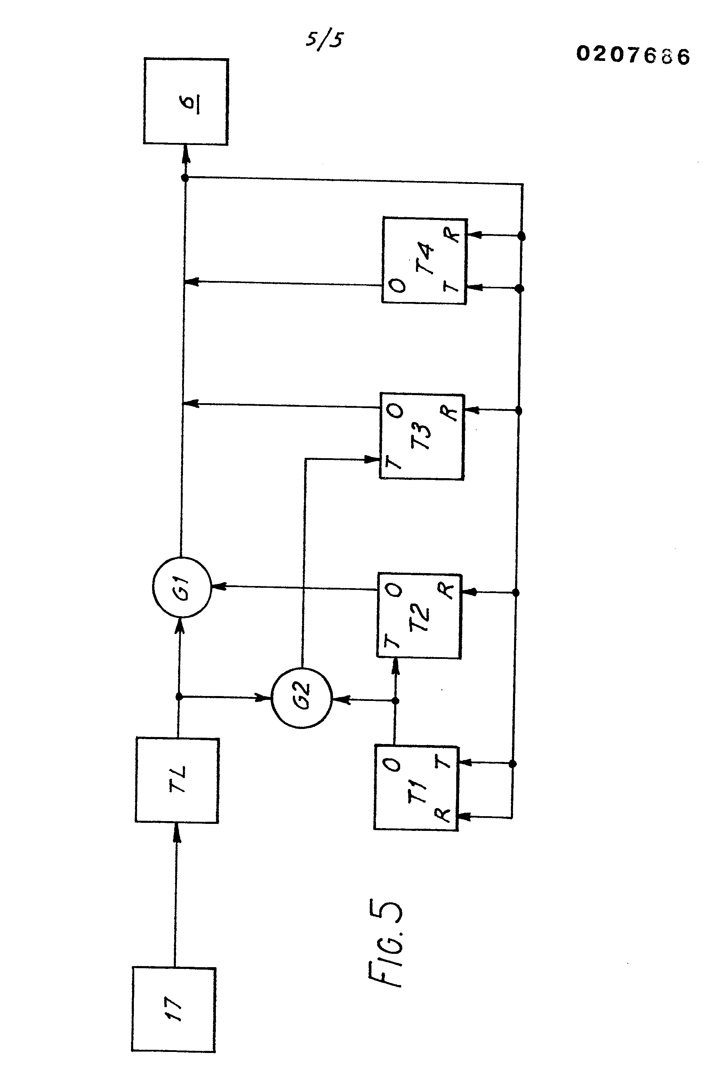

Referring now to Figure 5, there is shown a block circuit diagram of the control circuit 28 which utilises the output signal from the sensor 17 to effect timed switching of the changeover valve 26. The circuit comprises four individual timing circuits T1, T2, T3 and T4, each of which is illustrated, diagrammatically, as having a reset input R, a triggering input T and an output O. In each case, after resetting of the timer by means of an input signal at R an input signal T will cause the output signal provided at O to change after a predetermined period determined by the setting of the timer. Although the terminals R and T of timers of T1 and T4 are shown as being connected in common for simplicity, it will be appreciated that by means known to one one skilled in the art the respective signals will be slightly delayed in time so that after resetting of the timer, it is substantially simultaneously triggered to commence its timing period.

The sensor 17 is illustrated as connected to a threshold level detecting circuit TL which may be preset to respond to a predetermined level of output signal from the sensor 17 corresponding to a desired oxygen concentration. The circuit TL provides a corresponding output signal to the input of two signal control gates G1 and G2. The output of signal gate G1 is coupled directly to a change-over actuator for the valve 26, whereas the output of gate G2 is connected to the same actuator via the triggering and output terminals of the timer T3. The signal gate G1 is so configured that it is only capable of passing the signal from the threshold level circuit TL whilst it also receives the timing signal provided from the output O of timing circuit T2 during the time period following triggering of the latter, whereas the signal gate G2 is arranged to block the signal from the threshold level circuit TL when it receives the corresponding timing signal from the output O of timer T1..

The operation of the circuit of Fig. 5 will now be explained in more detail with reference to Fig. 3.

It will be assumed that the cycle of operation of the circuit of Fig. 5 has commenced with the switching of the valve 26 by means of an output signal derived from the threshold level circuit TL as the output signal from the sensor 17 passes through the threshold level indicated at TL in Fig. 3, i.e. at point A on the signal waveform of the sensor 17. At the same time, all of the timing circuits T1 to T4 are reset by means of the output signal, timers T1 and T4 simultaneously being triggered to start their corresponding timing periods. Following the actuation of changeover valve 26, the oxygen concentration measured by the sensor 17 continues to fall below the switching threshold level, and then rises as the oxygen content of the product gas is enriched by the output from the freshly substituted adsorption bed. In order to prevent the signal from the threshold level detector TL from again triggering actuation of the valve 26, the gate G1 is at this time inhibited by the output from the timing circuit T2, whereas the gate G2 is inhibited by the output signal from the timing circuit T1. At the end of the timing period t1 determined by the timer T1, the signal from its output O changes state, thus removing the inhibition from the signal gate G2 and also triggering commencement of the timing period of the timer T2. The triggering of timer T2 causes a corresponding change in state of the signal at its output O, whereby the inhibition of signal gate G1 is removed. Thus, if the level of the output signal of the sensor 17 again crosses the threshold TL during the timing period t2 set by timer T2, for example as illustrated at C on the waveform as shown in full lines in Fig. 3, the corresponding output signal will be passed by gate G1 directly to the actuating circuit of the valve 26, so that the part cycle of the system is completed and all of the timing circuits T1 to T4 are reset.

It will be noted that in the above described operating cycle of the device the timers T3 and T4 have no affect, since the point C at which the output waveform of the sensor 17 crosses the threshold level TL occurs before the end of the timing period t2. The operation of the circuit in the event that the point C lies outside the time period t2 will be described below, but to explain the purpose of the timer T3 reference will first be made to Figure 2.

As referred to above, Figure 2 illustrates the required relationship between the time between switching operations of the valve 26 and the rate at which the breathable atmosphere provided by the system is consumed, in order to maintain a constant given oxygen concentration in the breathable air supply (for a given altitude). Although, as described above with reference to Fig. 4, there is a direct relationship between the threshold level at which the output signal of the sensor 17 causes switching of the valve 26, and the resultant oxygen concentration of the breathable atmosphere, when the system is providing a constant flow of breathable gas, this relationship has been found to change when a varying demand for the product gas causes a significant change in the cycling time of the system. Thus, as shown in Fig. 2 the curve indicated in broken lines at A illustrates the variation in oxygen concentration in the product gas in response to variation of the cycle time of the system, when the threshold level is set to cause triggering of the changeover valve 26 at a constant measured oxygen partial pressure of, for example, 230 mm of mercury. The point A' on the curve A indicates the oxygen concentration that would be produced at a cycle time of 5 seconds, this value corresponding to the same value that would appear on the curve illustrated in Fig. 4. In order to provide a constant oxygen concentration with varying cycle time, the ideal response curve of the system containing the point A', would be the curve indicated in broken lines at B in Fig. 2.

In order to cause the response of the system to approximate more closely to the ideal curve B, the timer T3 is caused to delay the switching point of the changeover valve 26, after expiry of the time period t2 illustrated in Fig. 3, in the following manner. Referring again to Fig. 3 it will be assumed that, owing to a reduced demand for breathable atmosphere, the variation in the flow of gas through the system is such that the output signal from the sensor 17 is caused to follow the broken line in Fig. 3, so that the signal crosses the threshold level TL not at point C, but at the point C', after expiry of the time period T2. At this time, the change in state of the output signal from the timer T2 after expiry of its timing period has blocked the signal gate G1 and therefore the output signal from the threshold level detector TL cannot pass directly to the changeover valve actuating means, but passes via the signal gate G2 to trigger the timer T3. After a delay determined by the timing period of the timer T3, a corresponding output signal is generated to trigger the changeover of the valve 26, and the correspondingly increased cycle time of the system has the effect of displacing the response curve A of Figure 2 to follow the path A'' illustrated in broken lines, thereby modifying the response curve to correspond more closely with the ideal curve B.

The purpose of the timer T4 is to set an overall maximum cycle time of the system, so that in the absence of any signal from the threshold level detection circuit TL during a maximum time period t4 of, for example, ten seconds, the changeover of the valve 26 is automatically triggered. This provides for reliable start-up of the system, and also takes account of other eventualities in which a threshold level detection signal might not occur.

It will be appreciated that the apparatus described above, by enabling an accurate determination of the point of exhaustion of each filtration bed, and providing a rapid and accurate means for sensing the oxygen concentration of the product gas, will enable, in relation to known systems, a considerable simplification of the known processes for the control of a pressure-swing oxygen enrichment system.

It will also be appreciated that modifications may be made to the system described without departing from the scope of the invention. For example the oxygen supplied to the sensor 17 of Fig. 1 could be derived from a point in the flowpath through the adsorption bed 1 or 2 in advance of the outlet of the bed, as indicated by the connections shown in broken lines in Fig. 1.

Also, although a simple control circuit as shown in Fig. 5 has proved effective, it would be possible to provide a more accurate control to take account of all operating conditions of the system by utilising a microprocessor programmed to respond to one or more additional measured parameters, such as aircraft altitude. Thus by processing of the output signal from the sensor 17 and the further measured parameter or parameters,utilising corresponding stored values of the relevant parameters, a more accurate adjustment to the desired oxygen concentration could be obtained by a corresponding variation in the switching time of the changeover valve.

CLAIMS.

0207686

1. A pressure swing oxygen concentration system of the kind comprising at least two beds (1,2,) of adsorption medium, means (26) for cyclically coupling to each bed in turn a source (7) of compressed atmospheric air, whereby, by adsorption of unwanted gas or gases within the bed, there is produced at a common outlet from the beds a continuous supply of atmospheric air of which the oxygen content is enriched in comparison with that of the air provided from the original source, each adsorption bed (1,2,) being purged of the waste gas or gases between the periods of time in which it is coupled to the source of compressed air, and means for controlling the duration of each period for which an adsorption bed is coupled to said source of compressed air in order correspondingly to control the mean concentration of oxygen in the air provided at said common outlet, characterised by means (17) for continuously monitoring the state of exhaustion of each adsorption bed (1,2) in order to determine the point at, or shortly before, which an increased concentration of oxygen will no longer be produced at the downstream side of the adsorption bed, and means (TL) responsive to an output signal from said monitoring means (17) for controlling the cycle time at which a further adsorption bed is substituted for the exhausted or substantially exhausted bed prior to purging of the latter.

2. A system as claimed in Claim 1, characterised in that the said means (17) for monitoring the state of exhaustion of each adsorption bed comprises means for sensing the concentration of oxygen present in the atmospheric air at or adjacent the outlet of each bed and said responsive means comprises a control means for initiating the substitution of a fresh adsorption bed for an exhausted, or partly exhausted bed, when the said oxygen concentration is reduced to a given level.

3. A system as claimed in Claim 2, characterised in that the said means (17) for sensing oxygen concentration comprises an electrolytic cell for detecting the oxygen partial pressure utilising atmospheric air as a reference gas, a back pressure regulator (19) being provided in the supply of air as the reference gas, in order to maintain a constant absolute pressure of the reference gas.

4. A system as claimed in Claim 2 or 3, characterised in that a single oxygen concentration sensing means is provided for sensing the oxygen concentration of the product gas from all of said adsorption beds in turn.

5. A system as claimed in Claim 4, characterised in that said system comprises two adsorption beds (1,2) each having conduits (3,4;5,6) coupled to respective ends of a gas flow path provided by the bed, one conduit (3;5) coupled to each bed being in communication with a changeover valve (26) arranged in each of two alternative positions to couple one of the two (3;5) conduits to a source of compressed atmospheric air (7) and the other (5;3) to a source of reduced pressure (8) to which waste gas can be evacuated, and vice versa, that the other conduit (4;6) from each bed is coupled via a non-return valve (9;10) to a reservoir (11) for storing the oxygen enriched product gas, that the gas flow path of each bed is coupled, at a point upstream of said non-return valve (9;10) and at or adjacent that end of the flow path communicatingh with said other conduit (4; 6), via a throttle or flow restrictor (14;16) to a common conduit (13) providing a gas flow path (20) to said oxygen concentration sensing (17), the latter providing a flow outlet to ambient atmosphere for the product gas, whereby measurement of the oxygen concentration is effected at substantially the ambient atmospheric pressure prevailing at the location of the sensor (17).

6. A system as claimed in Claim 5, characterised in that a further flow restrictor (16) is provided in said common conduit (13), whereby, during each part-cycle of the system, oxygen enriched product gas can flow from the restrictor (14;15) coupled to one bed (1;2) both to the oxygen concentration sensor (17) and to the bed (2;1) which is being purged of waste gas.

7. A system as claimed in Claim 5, characterised in that said control means comprises a threshold level detecting circuit (TL) for triggering an actuator to operate said changeover valve (26) in response to passage of an output signal from said oxygen concentration sensor (17) through a threshold level corresponding to the reduction of the oxygen partial pressure of the sensed gas to a predetermined value.

8. A system as claimed in Claim 7, characterised in that said control means further comprises timing means (T1,T2) responsive to a signal for triggering said actuator, in order to set a predetermintled time period during which said actuator can be triggered by a further signal from said threshold level detecting circuit (TL).

9. A system as claimed in Claim 8, characterised in that said control means comprises a further timing means (T3), responsive to a signal from said threshold level detecting circuit (TL) received after expiry of said predetermined time period, for triggering said actuator after a further period of time set by the further timing means (T3).

10. A system as claimed in any one of Claims 7 - 10, characterised in that said control means comprises a timing means (T4) for setting a predetermined maximum period of time after which the said actuator is triggered in the absence of a triggering signal from said threshold level detecting circuit (TL).

17
19
18
27
20
28
9
16
13
10
4
14
15
6
1
2
11
3
5
12
26
7
8

FIG. 1

FIG. 2
31000 FT.
AIRCRAFT
ALTITUDE
PRODUCT FLOW RATE LITRES/MIN
200
150
100
50
PART CYCLE TIME—SECONDS
5
6
7
8
9
10
11
35% O2
40% O2
45% O2
50% O2
60% O2
70% O2
80% O2
90% O2
A'
A
B
A''
A

HIGH
%O2
LOW
A
B
C
C'
TL
t1
t2
t3
t4

FIG. 3

FIG. 4

31000 FT. AIRCRAFT ALTITUDE
PART CYCLE TIME 5 SEC.
% O2 SENSED AT END OF EACH PART CYCLE
90
80
70
60
50
40
30
30
40
50
60
70
80
90
PRODUCT PURITY % O2

6
17
TL
G1
G2
T1
T2
T3
T4
O
T
R

FIG. 5

European Patent Office

# EUROPEAN SEARCH REPORT

0207686

Application number

EP 86 30 4685

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 129 304 (NORMALAIR-GARRETT LTD.)<br>* Page 6, lines 5-8; claim 5 *<br>--- | 1-4 | B 01 D 53/04<br>C 01 B 13/02 |
| X | EP-A-0 046 369 (NORMALAIR-GARRETT LTD.)<br>* Page 3, lines 13-18; page 5, lines 1-21; figure 1 *<br>--- | 1,2,4, 5,7-10 | |
| A | EP-A-0 121 796 (LITTON SYSTEMS INC.)<br>* Page 3, line 24 - page 4, line 22; claim 1 *<br>--- | 1,4 | |
| A | US-A-4 516 424 (R.O. HOWLAND)<br>* Column 2, line 56 - column 3, line 20; figure *<br>----- | 1,2,4, 5 | TECHNICAL FIELDS SEARCHED (Int Cl 4)<br>B 01 D 53/00<br>C 01 B 13/00 |

The present search report has been drawn up for all claims

| Place of search | Date of completion of the search | Examiner |
|---|---|---|
| THE HAGUE | 28-10-1986 | HILD |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82